# FASCICULE DE BREVET EUROPEEN

(11) **EP 2 384 315 B1**
(45) Date de publication et mention de la délivrance du brevet: **08.11.2017**
(21) Numéro de dépôt: 09805796.1
(22) Date de dépôt: 28.12.2009
(51) Int. Cl.: C03C 13/00, C03C 25/24, C03C 25/28, C03C 25/34, D04H 1/4209, D04H 1/4218, D04H 1/587, C03C 13/06, D04H 1/64

(54) **PRODUIT D'ISOLATION A BASE DE LAINE MINERALE RESISTANT AU FEU ET PROCEDE DE FABRICATION**
FEUERBESTÄNDIGES ISOLIERPRODUKT AUS STEINWOLLE UND VERFAHREN ZU DESSEN HERSTELLUNG
FIRE-RESISTANT MINERAL WOOL INSULATING PRODUCT AND PRODUCTION METHOD THEREOF

(30) Priorité: 30.12.2008 FR 0859129
(43) Date de publication de la demande: 09.11.2011
(73) Titulaire: Saint-Gobain Isover, 92400 Courbevoie (FR)
(72) Inventeur: DIDIER, Benoît, F-94130 Nogent Sur Marne (FR)
(74) Mandataire: Saint-Gobain Recherche
(86) Numéro de dépôt international: PCT/FR2009/052710
(87) Numéro de publication internationale: WO 2010/076533

(56) Documents cités:
- EP-A- 1 522 640
- WO-A-2005/033032
- DE-A1- 19 604 238
- FR-A- 2 783 516
- GB-A- 1 105 653
- US-A- 5 340 868
- US-A1- 2007 105 467

## Description

La présente invention se rapporte au domaine des produits d'isolation, thermiques et/ou acoustiques aptes à résister au feu, à base de laine minérale, notamment de verre ou de roche, et un liant organique. Plus précisément, l'invention concerne des produits d'isolation qui renferment en tant qu'agent retardateur de feu un sel métallique d'acide polycarboxylique non polymérique.

L'invention concerne aussi le procédé de fabrication desdits produits d'isolation.

Les produits à base de fibres de verre sont largement utilisés, en particulier pour la fabrication de produits isolants thermiques et/ou acoustiques dans lesquels les fibres sont sous la forme de laine minérale.

Dans ces produits isolants, les fibres sont liées par une résine thermodurcissable, le plus souvent une résine phénolique appartenant à la famille des résols, qui présente une bonne aptitude à réticuler thermiquement, est soluble dans l'eau, a une affinité importante pour les fibres minérales et est relativement peu coûteuse. Cette résine confère au produit isolant les propriétés requises telles qu'une stabilité dimensionnelle, une résistance à la traction, une reprise d'épaisseur après la compression et une couleur homogène.

Dans certaines applications où le produit d'isolation est exposé à des températures élevées, (appareils ménagers, conduits de chauffage, ...) ou doit satisfaire à des réglementations strictes (navires, bâtiments publics, ...), il est impératif que celui-ci possède en outre une bonne résistance au feu. En d'autres termes, il s'avère essentiel que la propagation de flamme soit empêchée ou au moins retardée quand la résine réticulée qui lie les fibres est soit soumise à des températures importantes provoquant sa combustion, soit exposée directement aux flammes.

Des solutions ont été proposées pour améliorer la résistance au feu de produits renfermant des fibres minérales qui consistent à ajouter un agent retardateur de feu, par exemple un composé phosphoré (voir US 4 159 139), un composé halogéné, notamment chloré ou bromé, un composé azoté (voir US 5 840 413) ou un hydroxyde de métal (voir US 6 368 991 et US 2007/0105467). Néanmoins, ces solutions ne donnent pas entièrement satisfaction :
- les composés renfermant du phosphore sont coûteux,
- les composés halogénés ne sont pas souhaités à cause des risques qu'ils peuvent présenter au regard des opérateurs (décomposition partielle avec émissions gaz halogénés toxiques) et de la ligne de fabrication (corrosion). Les composés halogénés génèrent de surcroît d'importantes fumées contenant des gaz toxiques lorsqu'ils sont exposés directement aux flammes, et
- les hydroxydes de métal sont difficiles à mettre en oeuvre. Du fait de leur insolubilité dans l'eau, les hydroxydes de métal sont employés sous la forme d'une dispersion aqueuse, de surcroît en quantité importante pour que l'effet retardateur de feu soit obtenu. Les inconvénients liés à l'application de la dispersion aqueuse, qui est généralement pulvérisée sur la laine minérale, sont des risques de bouchage des buses de pulvérisation et une distribution non homogène des particules d'hydroxyde de métal dans le produit final.

Dans GB 1 105 653, il est proposé une composition d'encollage pour un produit fibreux moulé possédant des propriétés isolantes phoniques et thermiques qui contient un sel hydrosoluble d'aluminium ou de magnésium d'acide carboxylique.

FR 2 783 516 et DE 196 04 238 décrivent des compositions de laine minérale susceptibles de se dissoudre dans un milieu physiologique. La laine minérale ne contient aucun agent retardateur de feu.

Dans EP 1 522 640, il est décrit un élément isolant acoustique et thermique à base de fibres minérales utilisé dans la construction navale qui se présente sous la forme d'une plaque ou d'un feutre enroulé.

US 2008/0004416 décrit un promoteur d'adhérence pour des fibres de verre qui contient un copolymère hydrophobe renfermant au moins un groupe acide et au moins un groupe amide substitué, silanol ou oxyde d'amine.

US 2007/0298246 décrit un revêtement inhibiteur de corrosion pour des surfaces métalliques qui contient une couche hydrophile dans laquelle est dispersé l'inhibiteur de corrosion et une couche imperméable à l'oxygène et à l'eau placée au-dessus de la première couche. L'agent inhibiteur de la corrosion est notamment le citrate de zinc.

Enfin, EP 1 837 364 décrit une procédé de neutralisation de l'acidité résiduelle contenue dans des compositions phénoliques qui utilise un composé neutralisant comprenant un produit réactif avec les acides organiques ou inorganiques et un composé d'enrobage.

La présente invention a pour but de proposer un produit d'isolation thermique et/ou acoustique résistant au feu qui contient un agent retardateur de feu hydrosoluble et distribué de manière uniforme au sein dudit produit.

Pour atteindre ce but, l'invention utilise en tant qu'agent retardateur de feu un sel métallique d'acide polycarboxylique non polymérique comme indiqué dans la revendication 1, en particulier un polycarboxylate de métal choisi parmi l'aluminium, le zinc et le magnésium, de préférence le magnésium.

Le sel métallique d'acide polycarboxylique non polymérique est choisi parmi les acides dicarboxyliques tels qu'un succinate, un adipate, un citraconate ou un phtalate, les acides tricarboxyliques tels qu'un citrate ou un trimellitate, et les acides tétracarboxyliques tel qu'un 1,2,3,4-butanetétracarboxylate.

Avantageusement, le sel métallique d'acide polycarboxylique non polymérique est un sel métallique d'acide alicyclique, ramifié ou non, saturé ou insaturé, d'acide cyclique ou d'acide aromatique.

Avantageusement, le sel métallique d'acide polycarboxylique non polymérique est le succinate de magnésium, l'adipate d'aluminium, l'adipate de magnésium, le citraconate de magnésium, le phtalate d'aluminium, le phtalate de magnésium, le citrate d'aluminium, le citrate de zinc, le citrate de magnésium, le trimellitate, de magnésium et le 1,2,3,4-butanetétracarboxylate de magnésium. On préfère tout particulièrement le phtalate de magnésium et le citrate de magnésium.

Le sel métallique d'acide polycarboxylique non polymérique conforme à l'invention peut être obtenu par une réaction de salification de l'acide polycarboxylique par l'hydroxyde de métal correspondant, à savoir l'hydroxyde d'aluminium, de magnésium ou de zinc.

Comme indiqué précédemment, l'acide polycarboxylique est un acide organique non polymérique dicarboxylique, tricarboxylique ou tétracarboxylique. Avantageusement, l'acide polycarboxylique non polymérique est un acide alicyclique, ramifié ou non, saturé ou insaturé, un acide cyclique ou un acide aromatique.

De manière particulièrement avantageuse, l'acide polycarboxylique non polymérique est l'acide phtalique ou l'acide citrique, et l'hydroxyde de métal est l'hydroxyde de magnésium.

La réaction de salification est effectuée par simple mélange de l'acide polycarboxylique non polymérique, en solution dans l'eau, et de l'hydroxyde de métal à la température ambiante, de l'ordre de 25 à 30°C, ou à une température plus élevée mais qui n'excède cependant pas 100°C.

L'acide organique polycarboxylique non polymérique et l'hydroxyde de métal sont mis à réagir dans des conditions stoechiométriques, voire en présence d'un faible excès d'acide carboxylique. Par « faible excès », on entend une quantité d'acide carboxylique qui conduit à pH modérément acide, par exemple de l'ordre de 6, et qui peut aller jusqu'à 7. Un tel pH prévient les risques de corrosion dans la ligne de fabrication du produit d'isolation et une précipitation de la résine quand l'agent retardateur de feu est introduit dans la composition d'encollage comme cela est expliqué plus loin.

Le sel métallique d'acide polycarboxylique non polymérique peut encore être obtenu en faisant réagir un sel d'ammonium de l'acide polycarboxylique et le sulfate de métal correspondant, de préférence le phtalate ou le citrate d'ammonium et le sulfate de magnésium.

La réaction est effectuée par simple mélange des composés précités dans de l'eau à une température de l'ordre de 25 à 30°C, de préférence dans des conditions stoechiométriques. Le cas échéant, une étape supplémentaire de purification du produit de réaction est effectuée afin d'éliminer le sulfate d'ammonium formé.

La solution d'agent retardateur de feu ainsi obtenue peut contenir jusqu'à 50 % en poids de matières solides, de préférence jusqu'à 30 % et avantageusement de 10 à 20 %.

Conformément à l'invention, la quantité d'agent retardateur de feu représente 0,05 à 5 % du poids total du produit d'isolation, de préférence au plus 2 % et avantageusement 0,1 à 2 %.

Le liant organique qui assure le maintien de la laine minérale dans le produit d'isolation final est le produit de réticulation thermique d'une résine phénolique, urée-formaldéhyde, poly(acide (méth)acrylique), par exemple renfermant un homopolymère d'acide (méth)acrylique ou un copolymère acide (méth)acrylique-hydroxyéthylacrylate, polyuréthane ou alkyde. De préférence, la résine est une résine phénolique ou poly(acide (méth)acryfique).

De préférence, la résine est une résine phénolique, avantageusement un résol obtenu par condensation d'un composé phénolique, de préférence le phénol, et d'un aldéhyde, de préférence le formaldéhyde en présence d'un catalyseur basique, dans un rapport molaire formaldéhyde/phénol supérieur à 1. Le résol peut avoir été préalablement modifié par réaction avec de l'urée.

La quantité de résine représente 1 à 10 % en poids de matières solides par rapport au poids total du produit d'isolation, de préférence au plus 5 %.

Le produit d'isolation qui combine un résol ayant une faible teneur en formaldéhyde libre, inférieure à 0,05 %, et le phtalate de magnésium s'avère particulièrement avantageux en termes de résistance au feu.

La laine minérale peut être constituée de fibres de verre ou de roche.

Les fibres de verre peuvent être constituées d'un verre de quelque nature que ce soit, en particulier un verre à teneur élevée en alumine tel que décrit dans WO 00/17117, qui comprend les constituants ci-après dans les proportions suivantes, exprimées en pourcentages pondéraux :

| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |

la teneur en MgO étant comprise entre 0 et 5 % lorsque la teneur en R₂O est inférieure ou égale à 13,0 %.

Avantageusement, le verre a la composition décrite dans WO 2005/033022 qui comprend les constituants ci-après dans les proportions suivantes (en % pondéral) :

| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

L'invention a aussi pour objet le procédé de fabrication du produit d'isolation résistant au feu précédemment décrit.

La fabrication de produits d'isolation à base de laine minérale est bien connue : elle comprend une étape de fabrication de la laine elle-même, une étape d'encollage de la laine minérale et une étape de traitement thermique en vue de lier la laine minérale.

La première étape de fabrication de la laine minérale peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Dans la deuxième étape, on projette sur les fibres, sur le trajet allant de la sortie du dispositif centrifuge vers l'organe récepteur, une composition d'encollage contenant une résine thermodurcissable dont le rôle est d'assurer l'assemblage des fibres entre elles et de permettre à la laine minérale d'avoir de la cohésion.

Dans la troisième étape, les fibres revêtues de l'encollage rassemblées en une nappe sont soumises à un traitement thermique, à une température généralement supérieure à 100°C, afin d'effectuer la polycondensation de la résine et obtenir ainsi une liaison des fibres par un liant infusible et insoluble dans l'eau.

A la sortie du dispositif de traitement thermique, le produit d'isolation est collecté sous forme d'enroulements ou de panneaux découpés aux dimensions souhaitées, puis emballé.

Le procédé conforme à la présente invention comprend aussi une étape consistant à appliquer le sel métallique d'acide polycarboxylique non polymérique sur la laine minérale.

Selon un mode de réalisation préféré, le sel métallique d'acide polycarboxylique non polymérique est incorporé dans la composition d'encollage, ce qui permet son application en une seule étape. L'ajout du sel métallique d'acide polycarboxylique non polymérique peut se faire de manière extemporanée pour une application immédiate de la composition d'encollage ou dans la résine (ou « premix ») qui est conservée pendant une durée variable à une température de l'ordre de 10 à 20°C avant d'être utilisée dans la composition d'encollage.

Selon un autre mode de réalisation, le sel métallique d'acide polycarboxylique non polymérique est appliqué séparément de la composition d'encollage.

Une telle application peut se faire de différentes manières en utilisant le sel métallique d'acide polycarboxylique non polymérique en solution dans l'eau.

Selon une première variante préférée, on applique la solution aqueuse de sel métallique d'acide polycarboxylique non polymérique sur les fibres minérales immédiatement après qu'elles ont été formées, de préférence avant l'application de la composition d'encollage.

Selon une deuxième variante, également préférée, on applique la solution aqueuse de sel métallique d'acide polycarboxylique non polymérique sur la laine minérale avant son entrée dans le dispositif assurant la cuisson de la résine, ce qui permet d'éliminer l'eau contenue à la fois dans la solution dudit sel et dans la composition d'encollage.

Selon une troisième variante, la solution aqueuse de sel métallique d'acide polycarboxylique non polymérique est appliquée sur le produit d'isolation traité thermiquement, de préférence avant sa collecte. Dans ce cas, il est préférable de placer un dispositif supplémentaire de séchage en aval du dispositif d'application du sel métallique d'acide polycarboxylique non polymérique et en amont de la collecte.

L'application de la composition de sel métallique d'acide polycarboxylique non polymérique est généralement effectuée par pulvérisation. Le fait que ledit sel est soluble dans l'eau aide à une bonne application : on évite ainsi les dépôts de matières solides pouvant colmater les orifices des pulvérisateurs et on obtient une répartition uniforme dudit agent sur la laine minérale. En outre, la quantité de sel métallique d'acide polycarboxylique non polymérique dans la solution peut être importante ce qui permet de limiter la quantité d'eau et par conséquent de réduire le coût de traitement des eaux résiduaires.

Quel que soit le mode de réalisation, le sel métallique d'acide polycarboxylique non polymérique est utilisé à raison de 5 à 50 parts en poids (de matières solides) pour 100 parts en poids (de matières solides) de résine, et éventuellement d'urée et de glycérol comme explicité plus loin, de préférence au plus 30 parts, avantageusement au moins 10 parts et mieux encore de 8 à 20 parts.

La composition d'encollage adaptée à la fabrication des produits isolants à base de laine minérale, notamment de verre ou de roche, décrits plus haut comprend :
- au moins un sel métallique d'acide polycarboxytique non polymérique, de préférence un polycarboxylate de métal choisi parmi le groupe constitué par l'aluminium, le zinc et le magnésium,
- au moins une résine thermodurcissable, de préférence une résine phénolique, notamment appartenant à la famille des résols, ou une résine poly(acide (méth)acrylique),
- éventuellement de l'urée ou du glycérol.

De préférence, la composition d'encollage contient 8 à 20 parts en poids de sel métallique d'acide carboxylique pour 100 parts en poids (de matières solides) de résine thermodurcissable et le cas échéant d'urée lorsque la résine est un résol, ou de glycérol lorsque la résine est une résine poly(acide (méth)acrylique).

La composition d'encollage conforme à l'invention peut comprendre en outre les additifs conventionnels ci-après dans les proportions suivantes calculées sur la base de 100 parts en poids de résine thermodurcissable et d'urée ou de glycérol :
- 0 à 2 parts de silane, en particulier un aminosilane,
- 0 à 20 parts d'huile, de préférence 4 à 15 parts,
- 0 à 10 parts d'un catalyseur de polycondensation, par exemple le sulfate d'ammonium, de préférence moins de 7 parts
- 0 à 20 parts d'ammoniaque (solution à 20 % en poids), de préférence moins de 12 parts
- 0 à 50 parts d'un organophoshate
- 0 à 20 parts d'un silicone.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; le sulfate d'ammonium sert de catalyseur de polycondensation (dans l'étuve à chaud) après la pulvérisation de la composition d'encollage sur les fibres ; l'ammoniaque joue, à froid, le rôle de retardateur de polycondensation; l'organophosphate prévient le frittage des fibres minérales à haute température ; le silicone joue le rôle d'agent hydrophobe.

Les exemples qui suivent permettent d'illustrer l'invention sans toutefois la limiter.

### EXEMPLES 1 A 7

### a) préparation de solutions aqueuses de sels métalliques d'acides carboxyliques.

On mélange les acides carboxyliques et les hydroxydes de métal suivants en quantités stoechiométriques, sous agitation, à 25°C pendant 1 heure :

| | Acide carboxylique | Hydroxyde de métal | Sel obtenu |
|---|---|---|---|
| A | Acide phtalique | Mg(OH)₂ | Phtalate de magnésium |
| B | Acide adipique | Mg(OH)₂ | Adipate de magnésium |
| C | Acide citrique | Mg(OH)₂ | Citrate de magnésium |
| D | Acide acétique | Mg(OH)₂ | Acétate de magnésium |

Les solutions aqueuses de sels métalliques d'acide carboxylique obtenues présentent une teneur en matières solides égale à 45 %.

### b) préparation des compositions d'encollage

On prépare les compositions d'encollage données dans le tableau 1 contenant 20 parts en poids sec de solution aqueuse de sel métallique d'acide carboxylique obtenue sous a) et 100 parts en poids sec d'une résine thermodurcissable suivante :
G : résine phénolique préparée par réaction de formaldéhyde et de phénol (rapport molaire formaldéhyde/phénol égal à 3,2) en présence de catalyseur (NaOH ; 6 % en poids par rapport au phénol) dans les conditions de température décrites ci-avant jusqu'à un taux de conversion du phénol supérieur à 97 %. La résine est ensuite neutralisée à pH 7,3 par de l'acide sulfamique. A 60 parts de la résine phénolique, on ajoute 40 parts en poids d'urée.
H : résine préparée selon l'exemple 1 de WO2008/043960,
I : résine poly(acide acrylique): copolymère acide acrylique-hydroxyéthylacrylate commercialisée sous la référence QRXP 1736 par Rohm et Haas

Les compositions d'encollage sont disposées dans une coupelle et chauffées dans une étuve à 110°C pendant 60 minutes pour éliminer l'eau, puis à 180°C pendant 20 minutes pour cuire la résine.

Le résidu restant dans la coupelle après cuisson est soumis à une analyse thermogravimétrique (« TGA » en anglais) dans les conditions suivantes : 10 mg du résidu sont prélevés et déposés dans un creuset en alumine qui est ensuite placé dans un appareil mesurant en continu la perte de masse au cours d'un cycle de température allant de 25 à 700°C à la vitesse de 10°C/minute. Sur la courbe enregistrée, on détermine la température correspondant à une perte de la masse organique initiale de 50 %.

Les valeurs de températures des compositions d'encollage selon l'invention sont données dans le tableau 1 comparativement à des compositions d'encollage de référence ne contenant pas de sel métallique d'acide carboxylique ou contenant l'hydroxyde métallique correspondant, et à la composition de l'exemple 7 contenant un sel métallique d'acide monocarboxylique non polymérique.

L'ajout d'un polycarboxylate de magnésium dans les compositions d'encollage selon les exemples 1 à 6 permet d'améliorer la tenue en température : la température correspondant à une perte de 50 % de la matière organique initiale est plus élevée que celle des compositions d'encollage de référence 1, 3 et 5 contenant uniquement la résine thermodurcissable.

Les compositions d'encollage des exemples 1 à 3 possèdent une tenue en température supérieure à celle de la référence 2 contenant de l'hydroxyde de magnésium.

La composition d'encollage de l'exemple 4 présente une tenue en température très proche de celle de la référence 4 qui contient de l'hydroxyde de magnésium.

### EXEMPLE 8

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation de la composition d'encallage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 250°C où les constituants de l'encollage polymérisent pour former un liant.

Deux produits d'isolation ont été fabriqués : le premier en utilisant la composition d'encollage selon l'exemple 3 (exemple 8) et le deuxième en utilisant la composition d'encollage selon la référence 1.

Les produits d'isolation présentent une densité de 66 kg/m³ et une épaisseur de 60 mm.

Le produit d'isolation selon l'exemple 8 contient 0,2 % en poids de citrate de magnésium (calculé en poids sec par rapport au poids total du produit d'isolation) et présente une perte au feu égale à 2% (la perte au feu correspondant à la proportion pondérale de matières organiques sur le produit, que l'on détermine par pesée différentielle du produit avant/après traitement thermique de décomposition des matières organiques).

On soumet les produits d'isolation à des tests de résistance au feu dans les conditions de la norme décrite dans la Resolution A754(18) du code FTP (International Code for Application of Fire Test Procedures) rédigé par l'International Maritime Organization (IMO).

La température maximale atteinte par le produit d'isolation (correspondant au maximum du pic exothermique) est égale à 90°C pour le produit selon l'exemple 8 et à 202°C pour le produit de référence. Ces températures sont atteintes 20 minutes après le démarrage du test.

Le produit d'isolation selon l'exemple 8 qui contient du citrate de magnésium présente une meilleure résistance au feu car la température maximale atteinte est inférieure de 22°C à celle du produit de référence sans citrate de magnésium.

Il convient de noter que cette performance améliorée est obtenue sans dégradation des propriétés globales du produit, notamment des propriétés mécaniques. Ainsi le produit d'isolation selon l'exemple 8 possède une résistance à la compression égale à 5,3 kPa, similaire à celle du produit utilisant la composition d'encollage selon la référence 1. La résistance à la compression est mesurée dans les conditions de la norme EN 826 (Thermal Insulating Products for Building Applications ; Détermination of Compression Behaviour).

**TABLEAU 1**

| Exemple | Sel métallique | Résine | Hydroxyde métallique | Température (°C) |
|---|---|---|---|---|
| 1 | A | G | - | 540 |
| 2 | B | G | - | 517 |
| 3 | C | G | - | 521 |
| 7^{(c)} | D | G | - | 420 |
| Réf. 1 | - | G | - | 471 |
| Réf. 2 | - | G | Magnésium | 484 |
| 4 | B | H | - | 580 |
| 5 | C | H | - | 534 |
| Réf. 3 | - | H | - | 484 |
| Réf. 4 | - | H | Magnésium | 589 |
| 6 | C | I | - | 442 |
| Réf. 5 | - | I | - | 377 |
| Réf. 6 | - | I | Magnésium | 470 |

| | | | | |
|---|---|---|---|---|
| ^{(C)} Comparatif | | | | |

## Revendications

1. Produit d'isolation thermique et/ou acoustique apte à résister au feu, à base de laine minérale, notamment de roche ou de verre, et d'un liant organique qui est le produit de réticulation thermique d'une résine phénolique, urée-formaldéhyde, poly(acide (méth)acrylique), polyuréthane ou alkyde, **caractérisé en ce qu'**il contient, en tant qu'agent retardateur de feu, un sel métallique d'acide polycarboxylique choisi parmi les acides dicarboxyliques, tricarboxyliques ou tétracarboxyliques non polymériques, ledit sel métallique d'acide polycarboxylique étant présent en une quantité représentant 5 à 50 parts en poids pour 100 parts en poids de la résine, et 0,05 à 5 % du poids total du produit d'isolation.

2. Produit selon la revendication 1, **caractérisé en ce que** le sel métallique d'acide polycarboxylique est un dicarboxylate, tricarboxylate ou tétracarboxylate de métal choisi parmi l'aluminium, le zinc et le magnésium.

3. Produit selon la revendication 1 ou 2, **caractérisé en ce que** le métal est le magnésium.

4. Produit selon l'une des revendications 1 à 3, **caractérisé en ce que** le sel métallique d'acide polycarboxylique est un sel métallique d'acide dicarboxylique, tricarboxylique ou tétracarboxylique non polymérique qui est alicyclique, ramifié ou non, saturé ou insaturé, cyclique ou aromatique.

5. Produit selon l'une des revendications 1 à 4, **caractérisé en ce que** le sel métallique d'acide polycarboxylique est le succinate de magnésium, l'adipate d'aluminium, l'adipate de magnésium, le citraconate de magnésium, le phtalate d'aluminium, le phtalate de magnésium, le citrate d'aluminium, le citrate de zinc, le citrate de magnésium, le trimellitate de magnésium, le 1,2,3,4-butanetétracarboxylate de magnésium.

6. Produit selon la revendication 5, **caractérisé en ce que** le sel métallique d'acide carboxylique est le phtalate de magnésium et le citrate de magnésium.

7. Produit selon l'une des revendications 1 à 6, **caractérisé en ce que** la quantité de sel métallique d'acide polycarboxylique représente au plus 2 % du poids total du produit d'isolation, de préférence 0,1 à 2 %.

8. Produit selon l'une des revendications 1 à 7, **caractérisé en ce que** la résine représente 1 à 10 % en poids de matières solides par rapport au poids total du produit d'isolation.

9. Produit selon l'une des revendications 1 à 8, **caractérisé en ce que** la laine minérale est constituée de fibres de verre qui comprend les constituants ci-après dans les proportions suivantes, exprimées en pourcentages pondéraux :
| | |
|---|---|
| SiO₂ | 39-55 % |
| Al₂O₃ | 16-27 % |
| CaO | 3-35 % |
| MgO | 0-15 % |
| Na₂O | 0-15 % |
| K₂O | 0-15 % |
| R₂O (Na₂O + K₂O) | 10-17 % |
| P₂O₅ | 0-3 % |
| Fe₂O₃ | 0-15 % |
| B₂O₃ | 0-8 % |
| TiO₂ | 0-3 % |
la teneur en MgO étant comprise entre 0 et 5 % lorsque la teneur en R₂O est inférieure ou égale à 13,0 %.

10. Produit selon la revendication 9, **caractérisé en ce que** le verre comprend les constituants ci-après dans les proportions suivantes (en % pondéral) :
| | |
|---|---|
| SiO₂ | 39-44 % |
| Al₂O₃ | 16-27 % |
| CaO | 6-20 % |
| MgO | 1-5 % |
| Na₂O | 0-15 % |
| K₂O | 0-15 % |
| R₂O (Na₂O + K₂O) | 10-14,7 % |
| P₂O₅ | 0-3 % |
| Fe₂O₃ | 1,5-15 % |
| B₂O₃ | 0-2 % |
| TiO₂ | 0-2 %. |

11. Procédé de fabrication d'un produit d'isolation selon l'une des revendications 1 à 10 qui comprend une étape de fabrication de la laine elle-même, une étape d'encollage de la laine minérale au moyen d'une composition d'encollage comprenant une résine phénolique, urée-formaldéhyde, poly(acide (méth)acrylique), polyuréthane ou alkyde, et
une étape de traitement thermique en vue de lier la laine minérale, ledit procédé comprenant en outre une étape consistant à appliquer un sel métallique d'acide polycarboxylique choisi parmi les acides dicarboxyliques, tricarboxyliques ou tétracarboxyliques non polymériques sur la laine minérale, ledit sel métallique étant utilisé à raison de 5 à 50 parts en poids (de matières solides) pour 100 parts en poids (de matières solides) de résine.

12. Procédé selon la revendication 11, **caractérisé en ce que** le sel métallique d'acide carboxylique est incorporé dans la composition d'encollage.

13. Procédé selon la revendication 11, **caractérisé en ce que** le sel métallique d'acide polycarboxylique est appliqué séparément de la composition d'encollage, sur les fibres minérales immédiatement après qu'elles ont été formées, de préférence avant l'application de la composition d'encollage, ou sur la laine minérale avant son entrée dans le dispositif assurant la cuisson de la résine, ou encore sur le produit d'isolation traité thermiquement, de préférence avant sa collecte.

14. Procédé selon l'une des revendications 1 à 13, **caractérisé en ce que** le sel métallique d'acide carboxylique est utilisé à raison d'au plus 30 parts pour 100 parts en poids de résine, de préférence au moins 10 parts et avantageusement de 8 à 20 parts.

## Patentansprüche

1. Feuerbeständiges Produkt zur thermischen und/oder akustischen Isolierung auf der Basis von Mineralwolle, insbesondere von Stein- oder Glaswolle, und eines organischen Bindemittels, das das Produkt der thermischen Vernetzung eines Phenol-, Harnstoff-Formaldehyd-, Poly(methacryl)säure-, Polyurethan- oder Alkydharzes ist, **dadurch gekennzeichnet, dass** es als feuerverzögerndes Mittel ein Metallsalz der Polycarbonsäure, ausgewählt aus den nicht- polymerischen Dicarbon-, Tricarbon- oder Tetracarbonsäuren, enthält, wobei das besagte Metallsalz der Polycarbonsäure in einer Menge vorhanden ist, die 5 bis 50 Gewichtsanteile je 100 Gewichtsanteile des Harzes und 0,05 bis 5 % des Gesamtgewichts des Isolierprodukts darstellt.

2. Produkt nach Anspruch 1, **dadurch gekennzeichnet, dass** das Metallsalz der Polycarbonsäure ein Dicarboxylat, Tricarboxylat oder Tetracarboxylat eines Metalls, ausgewählt aus Aluminium, Zink und Magnesium, ist.

3. Produkt nach Anspruch 1 oder 2, **dadurch gekennzeichnet, dass** das Metall Magnesium ist.

4. Produkt nach einem der Ansprüche 1 bis 3, **dadurch gekennzeichnet, dass** das Metallsalz der Polycarbonsäure ein nicht-polymerisches Dicarboxylat-, Tricarboxylat- oder Tetracarboxylatmetallsalz ist, das alicyclisch, verzweigt oder nicht, gesättigt oder ungesättigt, cyclisch oder aromatisch ist.

5. Produkt nach einem der Ansprüche 1 bis 4, **dadurch gekennzeichnet, dass** das Metallsalz der Polycarbonsäure das Succinat von Magnesium, Aluminiumadipat, Magnesiumadipat, Magnesiumcitraconat, Aluminiumphtalat, Magnesiumphtalat, Aluminiumcitrat, Zinkcitrat, Magnesiumcitrat, Magnesiumtrimellitat, 1,2,3,4-Magnesiumbutantetracarboxylat ist.

6. Produkt nach Anspruch 5, **dadurch gekennzeichnet, dass** das Metallsalz der Polycarbonsäure Magnesiumphtalat und Magnesiumcitrat ist.

7. Produkt nach einem der Ansprüche 1 bis 6, **dadurch gekennzeichnet, dass** die Menge an Metallsalz der Polycarbonsäure höchstens 2 % des Gesamtgewichts des Isolierprodukts, vorzugsweise 0,1 bis 2 %, darstellt.

8. Produkt nach einem der Ansprüche 1 bis 7, **dadurch gekennzeichnet, dass** das Harz 1 bis 10 Gew.-% Feststoffe im Verhältnis zum Gesamtgewicht des Isolierprodukts darstellt.

9. Produkt nach einem der Ansprüche 1 bis 8, **dadurch gekennzeichnet, dass** die Mineralwolle von Glasfasern gebildet ist, die die folgenden Bestandteile in den folgenden Anteilen, ausgedrückt in Gewichtsprozent, umfasst:
| | |
|---|---|
| SiO₂ | 39-55 % |
| Al₂O₃ | 16-27 % |
| CaO | 3-35 % |
| MgO | 0-15 % |
| Na₂O | 0-15 % |
| K₂O | 0-15 % |
| R₂O (Na₂O + K₂O) | 10-17 % |
| P₂O₅ | 0-3 % |
| Fe₂O₃ | 0-15 % |
| B₂O₃ | 0-8 % |
| TiO₂ | 0-3 % |
wobei der Gehalt an MgO zwischen 0 und 5 % liegt, wenn der Gehalt an R₂O unter oder gleich 13,0 % ist.

10. Produkt nach Anspruch 9, **dadurch gekennzeichnet, dass** das Glas die im Folgenden genannten Bestandteile in den folgenden Anteilen umfasst (in Gewichtsprozent):
| | |
|---|---|
| SiO₂ | 39-44 % |
| Al₂O₃ | 16-27 % |
| CaO | 6-20 % |
| MgO | 1-5 % |
| Na₂O | 0-15 % |
| K₂O | 0-15 % |
| R₂O (Na₂O + K₂O) | 10-14,7 % |
| P₂O₅ | 0-3 % |
| Fe₂O₃ | 1,5-15 % |
| B₂O₃ | 0-2 % |
| TiO₂ | 0-2 % |

11. Verfahren zur Herstellung eines Isolierprodukts nach einem der Ansprüche 1 bis 10, das einen Schritt der Herstellung der Wolle selbst umfasst, einen Schritt des Verklebens der Mineralwolle mittels einer Kleberzusammensetzung, umfassend ein Phenol-, Harnstoff-Formaldehyd-, Poly(methacrylsäure)-, Polyurethan-oder Alkydharz, und
einen Schritt der thermischen Behandlung zum Verbinden der Mineralwolle, wobei das besagte Verfahren ferner einen Schritt umfasst, der darin besteht, ein Metallsalz der Polycarbonsäure, ausgewählt aus nicht-polymerischen Dicarbon-, Tricarbon- oder Tetracarbonsäuren, auf die Mineralwolle aufzutragen, wobei das besagte Metallsalz in einer Menge von 5 bis 50 Gewichtsanteilen (der Feststoffe) auf 100 Gewichtsanteile (der Feststoffe) Harz verwendet wird.

12. Verfahren nach Anspruch 11, **dadurch gekennzeichnet, dass** das Metallsalz der Carbonsäure in der Kleberzusammensetzung integriert ist.

13. Verfahren nach Anspruch 11, **dadurch gekennzeichnet, dass** das Metallsalz der Polycarbonsäure getrennt von der Kleberzusammensetzung auf die Mineralfasern aufgetragen wird, unmittelbar nachdem sie gebildet wurden, vorzugsweise vor dem Auftragen der Kleberzusammensetzung, oder auf die Mineralwolle vor deren Eintritt in die Vorrichtung, die das Härten des Harzes sichert, oder auf das thermisch behandelte Isolierprodukt, vorzugsweise bevor es gesammelt wird.

14. Verfahren nach einem der Ansprüche 1 bis 13, **dadurch gekennzeichnet, dass** das Metallsalz der Polycarbonsäure in einer Menge von höchstens 30 Anteilen auf 100 Gewichtsanteile Harz, vorzugsweise von mindestens 10 Anteilen und in vorteilhafter Weise von 8 bis 20 Anteilen, verwendet wird.

## Claims

1. A fire-resistant thermal and/or acoustic insulation product based on mineral wool, especially rock wool or glass wool, and on an organic binder which is the product resulting from the thermal crosslinking of a phenolic resin, a urea-formaldehyde resin, a poly(meth)acrylic acid resin, a polyurethane resin or an alkyd resin **characterized in that** it contains, as fire retardant, a polycarboxylic acid metal salt selected from dicarboxylic, tricarboxylic or tetracarboxylic nonpolymeric organic acids, said polycarboxylic acid metal salt is used in an amount of 5 to 50 parts per 100 parts by weight of resin, and 0.05 to 5% of the total weight of the insulation product.

2. The product as claimed in claim 1, **characterized in that** the polycarboxylic acid metal salt is a dicarboxylate, tricaboxylate or tetracarboxylate of a metal chosen from aluminum, zinc and magnesium.

3. The product as claimed in claim 1 or 2, **characterized in that** the metal is magnesium.

4. The product as claimed in one of claims 1 to 3, **characterized in that** the polycarboxylic acid metal salt is a metal salt of a dicarboxylic, tricarboxylic or tetracarboxylic nonpolymeric organic acid which is alicyclic acid, branched or unbranched, saturated or unsaturated, cyclic acid or aromatic.

5. The product as claimed in one of claims 1 to 4, **characterized in that** the polycarboxylic acid metal salt is magnesium succinate, aluminum adipate, magnesium adipate, magnesium citraconate, aluminum phthalate, magnesium phthalate, aluminum citrate, zinc citrate, magnesium citrate, magnesium trimellitate, magnesium 1,2,3,4-butanetetracarboxylate.

6. The product as claimed in claim 5, **characterized in that** the carboxylic acid metal salt is magnesium phthalate or magnesium citrate.

7. The product as claimed in one of claims 1 to 6, **characterized in that** the amount of carboxylic acid metal salt represents at most 2% and advantageously 0.1 to 2% of the total weight of the insulation product.

8. The product as claimed in one of claims 1 to 7, **characterized in that** the resin represents from 1 to 10% by weight of solid matter relative to the total weight of the insulation product.

9. The product as claimed in one of claims 1 to 8, **characterized in that** the mineral wool consists of glass fibers, the glass of which comprises the constituents below in the following proportions, expressed as percentages by weight:
| | |
|---|---|
| SiO₂ | 39-55 % |
| Al₂O₃ | 16-27 % |
| CaO | 3-35 % |
| MgO | 0-15 % |
| Na₂O | 0-15 % |
| K₂O | 0-15 % |
| R₂O (Na₂O + K₂O) | 10-17 % |
| P₂O₅ | 0-3 % |
| Fe₂O₃ | 0-15 % |
| B₂O₃ | 0-8 % |
| TiO₂ | 0-3 % |
the MgO content being between 0 and 5% when the R₂O content is less than or equal to 13.0%.

10. The product as claimed in claim 9, **characterized in that** the glass comprises the constituents below in the following proportions (in wt %):
| | |
|---|---|
| SiO₂ | 39-44 % |
| Al₂O₃ | 16-27 % |
| CaO | 6-20 % |
| MgO | 1-5 % |
| Na₂O | 0-15 % |
| K₂O | 0-15 % |
| R₂O (Na₂O + K₂O) | 10-14,7 % |
| P₂O₅ | 0-3 % |
| Fe₂O₃ | 1,5-15 % |
| B₂O₃ | 0-2 % |
| TiO₂ | 0-2 %. |

11. A process for manufacturing an insulation product as claimed in one of claims 1 to 10, which comprises a step of manufacturing the wool itself, a step of sizing the mineral wool with a sizing composition comprising a phenolic resin, a urea-formaldehyde resin, a poly(meth)acrylic acid resin, a polyurethane resin or an alkyd resin, and a heat treatment step for the purpose of binding the mineral wool, said process further including a step consisting in applying on the mineral wool a polycarboxylic acid metal salt selected from dicarboxylic, tricarboxylic or tetracarboxylic nonpolymeric organic acids, said polycarboxylic acid metal salt is used in an amount of 5 to 50 parts (of solid matter) per 100 parts by weight (of solid matter) of resin

12. The process as claimed in claim 11, **characterized in that** the carboxylic acid metal salt is incorporated into the sizing composition.

13. The process as claimed in claim 11, **characterized in that** the polycarboxylic acid metal salt is applied separately from the sizing composition on the mineral fibers immediately after they have been formed, preferably before the sizing composition has been applied, or on the mineral wool before its entry into the device for curing the resin, or else on the heat-treated insulation product, preferably before it is collected.

14. The process as claimed in one of claims 1 to 13, **characterized in that** the carboxylic acid metal salt is used in an amount of at most 30 parts, advantageously at least 10 parts and better still 8 to 20 parts by weight per 100 parts by weight of resin.
